# EUROPÄISCHE PATENTSCHRIFT

(11) **EP 1 316 749 B1**
(45) Veröffentlichungstag und Bekanntmachung des Hinweises auf die Patenterteilung: **05.10.2005**
(21) Anmeldenummer: 02026838.9
(22) Anmeldetag: 29.11.2002
(51) Int. Cl.: F16K 31/06

(54) **Miniaturisiertes Elektromagnetventil**
Micro solenoid valve
Soupape électromagnétique miniaturisée

(30) Priorität: 29.11.2001 DE 20119401 U
(43) Veröffentlichungstag der Anmeldung: 04.06.2003
(73) Patentinhaber: Bürkert Werke GmbH & Co., D-74653 Ingelfingen (DE)
(72) Erfinder: Töpfer, Heinz, Prof.Dr., 01277 Dresden (DE)
(74) Vertreter: Degwert, Hartmut

(56) Entgegenhaltungen:
- DE-B- 1 247 793
- DE-C- 3 334 158
- US-A- 4 561 632
- US-A- 4 574 841
- US-A- 5 711 346

## Beschreibung

Die Erfindung betrifft ein miniaturisiertes Magnetventil gemäß dem Oberbegriff von Anspruch 1.

Ein Magnetventil dieser Bauform kann durch zwei mit dem Permanentmagnet zusammenwirkende, einander gegenüberliegend am Gehäuse angeordnete Weicheisenteile mit zwei stabilen Schaltstellungen ausgestattet sein, zwischen denen durch impulsförmige Aktivierung des Elektromagneten umgeschaltet werden kann. Wesentliche Eigenschaften eines solchen bistabilen Magnetventils sind die Kräfte, mit denen die Schaltlamelle an den Dichtsitzen anliegt, und die Empfindlichkeit gegenüber von außen einwirkenden Beschleunigungen. Die Dichtkraft, also die Kraft, mit der die Schaltlamelle an dem Dichtsitz anliegt, bestimmt den maximal schaltbaren Mediendruck. Die Empfindlichkeit gegenüber von außen einwirkenden Beschleunigungen, insbesondere Erschütterungen, und die Gefahr des Prellens sind für die Einsatzmöglichkeiten des Magnetventils ausschlaggebend, wenn gefordert wird, daß die Schaltlamelle bei den maximal zulässigen Beschleunigungen sicher und ohne zu prellen in ihre jeweilige Schaltstellung gebracht wird und dort verharrt. Beide Eigenschaften werden unter anderem durch die magnetischen Anziehungskräfte zwischen dem Permanentmagnet und den Weicheisenteilen bestimmt. Bei einem miniaturisierten Magnetventil, dessen Abmessungen nur wenige Millimeter betragen, haben jedoch letztlich die Herstellungstoleranzen einen großen Einfluß auf die resultierenden Kräfte. Nicht nur die Maßtoleranzen der beteiligten Bauteile, auch Montagetoleranzen und streuende Materialeigenschaften, insbesondere des elastischen Materials, von dem die Schaltlamelle umgeben ist und an dem sie im Gehäuse eingespannt ist, und des Permanentmagneten, von dem letztlich die Magnetkräfte ausgehen, führen zu erheblichen Schwankungen der genannten Eigenschaften des Magnetventils.

Aus der US-A-4 574 841 ist ein Magnetventil bekannt, bei dem ein Dichtelement, das in einem im Gehäuse gebildeten Steuerraum angeordnet ist, selektiv an einen ersten oder an einen zweiten Dichtsitz dichtend anlegbar ist. Das Dichtelement ist an einem Ende eines Betätigungsarms angeordnet, an dessen anderem, entgegengesetzen Ende ein Permanentmagnet angeordnet ist. Der Permanentmagnet wirkt so mit einem Elektromagneten zusammen, daß er in der ersten und zweiten Schaltstellung jeweils in Anlage an einem seitlich vom Permanentmagnet angeordneten Magnetpol gehalten ist. In den Magnetpolen ist jeweils eine Bohrung ausgebildet, in der eine Schraube aus magnetisierbarem Material verschiebbar geführt ist.

Durch die Erfindung wird ein miniaturisiertes Magnetventil geschaffen, das sich durch präzise einstellbare Dicht- und Haltekräfte auszeichnet Dies wird durch die im kennzeichnenden Teil von Anspruch 1 angegebenen Merkmale erreicht. Der Permanentmagnet liegt in der ersten und in der zweiten Schaltstellung jeweils einem justierbar im Gehäuse gehaltenen Weicheisenteil gegenüber. Durch die Justierbarkeit der Weicheisenteile relativ zu dem Permanentmagnet können die wirksamen Magnetkräfte präzise so eingestellt werden, daß sich die erwünschten Dicht- und Haltekräfte einstellen. Da die zwei Weicheisenteile unabhängig voneinander justiert werden können, können die Dicht- und Haltekräfte für beide Schaltstellungen präzise eingestellt werden.

Für die Größe der Dicht- und Haltekräfte ist einerseits die Größe der Magnetkräfte zwischen Permanentmagnet und Weicheisenteilen, andererseits aber auch die Größe des Hebelarms, mit dem die Kräfte auf die Schaltlamelle einwirken, ausschlaggebend. Da die Anziehungskräfte zwischen Permanentmagnet und Weicheisenteilen auch vom Abstand zwischen diesen abhängig sind, ist bei einer ersten, nicht zur Erfindung gehörenden Ausführungsform dieser Abstand einstellbar. Dazu sind die Schaltstellungen der Schaltlamelle im Gehäuse durch Anschläge definiert, und die Weicheisenteile sind in je einer Bohrung des Gehäuses verschiebbar angeordnet.

Gemäß der Erfindung sind die Weicheisenteile in je einer Bohrung des Gehäuses verdrehbar angeordnet und weisen an ihrem dem Permanentmagnet zugewandten Ende ein exzentrisches Polstück auf. Durch Drehung der Weicheisenteile um ihre Achse wird die Länge des Hebelarms verändert, mit dem die Magnetkräfte an der Schaltlamelle angreifen.

Weitere Merkmale und Vorteile der Erfindung ergeben sich aus der folgenden Beschreibung einer bevorzugten Ausführungsform des Magnetventils sowie aus den beigefügten Zeichnungen, auf die Bezug genommen wird. In den Zeichnungen zeigen:
- Figur 1 in einem schematischen Längsschnitt ein miniaturiertes Magnetventil gemäß einer ersten, nicht zur Erfindung gehörenden Ausführungsform, bei der die Weicheisenteile in je einer Bohrung des Gehäuses verschiebbar angeordnet sind;
- Figur 2 in einem schematischen Längsschnitt ein erfindungsgemäßes miniaturisiertes Magnetventil gemäß einer zweiten Ausführungsform, bei der die Weicheisenteile in je einer Bohrung des Gehäuses verdrehbar angeordnet sind;
- Figur 3 in einer perspektivischen Ansicht die Schaltlamelle, die über den Betätigungsarm mit einem Magnethalter für den Permanentmagneten verbunden ist.

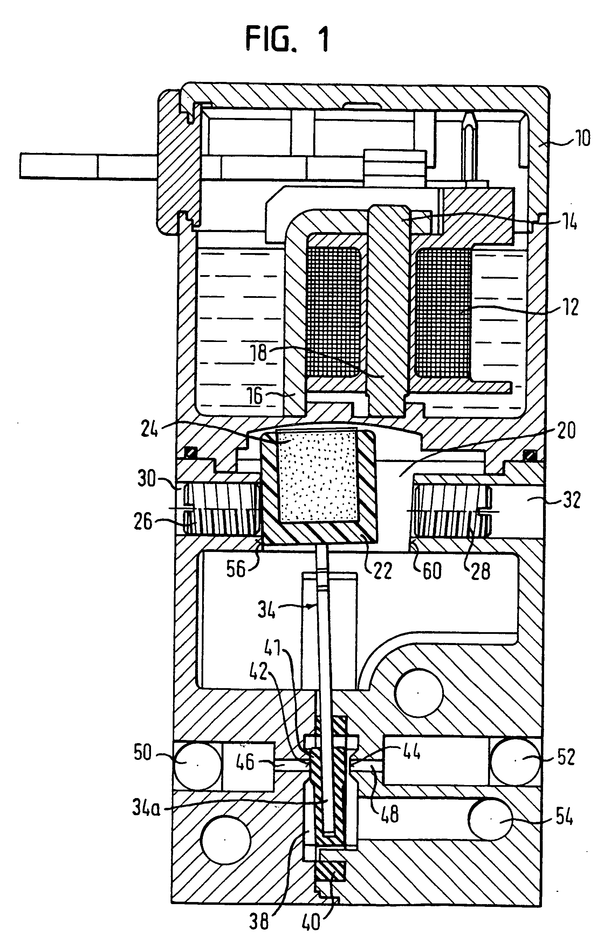

Das in Figur 1 gezeigte Magnetventil weist ein mehrteiliges quaderförmiges Gehäuse 10 auf. An einem Längsende des Gehäuses 10 befindet sich ein Elektromagnet mit einer Magnetspule 12 und einem Magnetkreis 14. Der Magnetkreis 14 weist einen Bügel 16 und einen Kern 18 auf Bezüglich Figur 1 unterhalb der Magnetspule 12 und des Magnetkreises 14 befindet sich ein Raum 20, in dem ein in einem Magnethalter 22 befindlicher Permanentmagnet 24 beweglich zwischen zwei Weicheisenteilen 26, 28 angeordnet ist. Der Magnethalter 22 ist bevorzugterweise aus einem Polymer gebildet. Die Weicheisenteile 26, 28 sind jeweils in einer Bohrung 30 bzw. 32 des Gehäuses verschiebbar angeordnet. Dazu sind bevorzugterweise die Bohrungen 30, 32 und die Weicheisenteile 26, 28 mit entsprechenden Schraubgewinden versehen. Die Bohrungen 30, 32 sind jeweils durchgehend ausgeführt, so daß eine Verschiebung der Weicheisenteile 26, 28 längs der Bohrungen 30, 32 beispielsweise mittels eines an den Weicheisenteilen 26, 28 angreifenden Schraubwerkzeugs von der Außenseite des Gehäuses 10 her erfolgen kann.

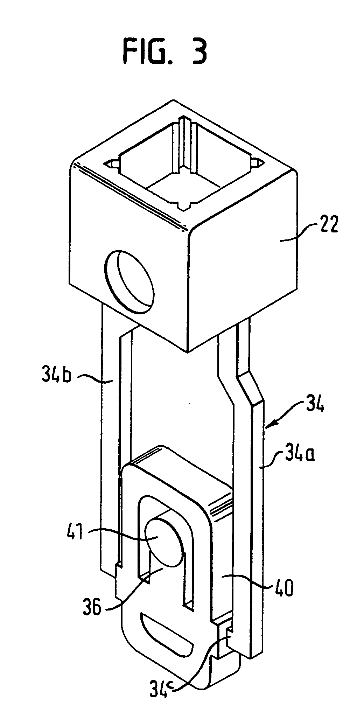

Der Permanentmagnet 24 ist über einen Betätigungsarm 34 direkt mit einer Schaltlamelle 36 verbunden, die sich in einem fluidischen Steuerraum 38 befindet und von einem geschlossenem Rahmen 40 aus elastischem Material umgeben ist (Figur 3). Auch die Schaltlamelle 36 selbst ist von elastischem Material umgeben. Der Rahmen 40 ist im Gehäuse 10 eingespannt und dichtet den fluidischen Steuerraum 38 von dem Raum 20 ab. Die Schaltlamelle 36 befindet sich dabei innerhalb des sie umgebenden Rahmens 40 aus elastischem Material und ist so zusammen mit dem Betätigungsarm 34 und dem Permanentmagneten 24 schwenkbar am Gehäuse 10 eingespannt.

Der Betätigungsarm 34 besteht aus einem aus Metallblech gestanzten Rahmen mit zwei parallelen Längsarmen 34a, 34b, die an ihrem einen Ende jeweils an dem Magnethalter 22 angeschlossen und an ihrem anderen Ende durch einen Quersteg 34c verbunden sind, der in den Rahmen 40 eingebettet ist. Die Schaltlamelle 36 ist mit diesem Quersteg 34c verbunden und trägt an ihrem freien Ende zwei einander gegenüberliegende Dichtkörper 41, die einteilig mit dem Rahmen 40 ausgebildet sind. Der Rahmen 40 ist frei zwischen den Längsarmen 34a, 34b angeordnet. Der größtenteils in das elastische Material des Rahmens 40 eingebettete Quersteg 34c des Betätigungsarms 34 ragt seitlich mit seinen an den Längsarmen 34a, 34b anschließenden Enden aus dem Rahmen 40 heraus und bildet die Schwenkachse des Betätigungsarmes 34 und der Lamelle 36.

In dem fluidischen Steuerraum 38 sind zwei gegenüberliegende Dichtsitze 42, 44 gebildet, an denen jeweils ein Strömungskanal 46 bzw. 48 in den fluidischen Steuerraum 38 mündet. Die Strömungskanäle 46, 48 sind jeweils über einen fluidischen Anschluß 50 bzw. 52 aus dem Gehäuse herausgeführt. Ein weiterer fluidischer Anschluß 54 mündet ebenfalls in den fluidischen Steuerraum 38. Die Dichtkörper 41 der Schaltlamelle 36 wirken mit den Dichtsitzen 42, 44 zusammen.

Der Elektromagnet wirkt so mit dem Permanentmagnet 24 zusammen, daß dieser je nach Magnetflußrichtung des von dem Elektromagneten erzeugten Magnetfeldes in eine erste oder in eine zweite Schaltstellung bewegt wird, wobei die Magnetflußrichtung durch die Polung eines an die Magnetspule 12 des Elektromagneten angelegten elektrischen Impulses bestimmt wird. Da die Schaltlamelle 36 über den Betätigungsarm 34 mit dem Permanentmagneten 24 verbunden ist, wird diese zusammen mit dem Permanentmagneten 24 jeweils in die erste oder in die zweite Schaltstellung bewegt. In der ersten Schaltstellung, die in Figur 1 zu sehen ist, liegt die Schaltlamelle 36 mit dem entsprechenden Dichtkörper 41 dichtend am Dichtsitz 42 an. In der zweiten Schaltstellung liegt der andere Dichtkörper 41 dichtend am Dichtsitz 44 an. In der ersten Schaltstellung ist somit die fluidische Verbindung zwischen dem Strömungskanal 46 und dem fluidischen Steuerraum 38 gesperrt und zwischen dem Strömungskanal 48 und dem fluidischen Steuerraum 38 geöffnet. In der zweiten Schaltstellung dagegen ist die fluidische Verbindung zwischen dem Strömungskanal 46 und dem fluidischen Steuerraum 38 geöffnet und zwischen dem Strömungskanal 48 und dem fluidischen Steuerraum gesperrt. Die erste und die zweite Schaltstellung sind jeweils durch einen ersten Anschlag 56 bzw. einen zweiten Anschlag 60 der den Permanentmagneten 24 umgebenden Magnethalter 22 an dem Gehäuse 10 definiert.

In der in Figur 1 abgebildeten, nicht zur Erfindung gehörenden Ausführungsform ist der Elektromagnet relativ zur Achse der Schaltlamelle 36 so versetzt angeordnet, daß sich der Permanentmagnet 24 in der ersten Schaltstellung bezüglich Figur 1 unterhalb des Bügels 16 des Magnetkreises 14 und in der zweiten Schaltstellung bezüglich Figur 1 unterhalb des Kerns 18 des Magnetkreises 14 befindet.

Durch das Zusammenwirken des Permanentmagneten 24 mit dem Weicheisenteil 26 bzw. 28 und dem Bügel 16 bzw. Kern 18 des Magnetkreises wird der Permanentmagnet 24 stabil in der ersten bzw. zweiten Schaltposition gehalten. Der minimale Abstand und damit auch die maximale Größe der Magnetkräfte zwischen den Weicheisenteilen und dem Permanentmagneten wird durch die Wanddicke des den Permanentmagneten 24 umgebenden Magnethalters 22 bestimmt. Die Wanddicke des Magnethalters 22 gewährleistet, daß bei Ansteuerung des Magnetventils des Elektromagneten der Permanentmagnet sich aus jeder der zwei stabilen Schaltstellungen lösen kann.

Der Abstand zwischen den Weicheisenteilen 26, 28 und dem Permanentmagneten 24 ist ein wichtiger Parameter, da die Anziehungskräfte zwischen dem Permanentmagneten 24 und dem Weicheisenteil 26 bzw. 28 die Größe der Dicht-und Haltekräfte des Magnetventils wesentlich mitbestimmen. Durch die Justierung der Weicheisenteile 26, 28 relativ zu dem Permanentmagneten 24 können die Dicht- und Haltekräfte nachträglich präzise eingestellt und so mögliche Maßtoleranzen der beteiligten Bauteile, Montagetoleranzen und streuende Materialeigenschaften ausgeglichen werden. Da die zwei Weicheisenteile 26, 28 unabhängig voneinander justiert werden können, können die Dicht- und Haltekräfte jeweils für beide Schaltstellungen getrennt eingestellt werden. Nach der Justierung wird die Position der Weicheisenteile bevorzugterweise fixiert, beispielsweise mit einem dafür geeigneten Kleber oder Lack.

Hohe Dichtheit und Sicherheit gegen Erschütterungen werden durch ausreichende Haltekräfte zwischen dem Permanentmagneten und den Weicheisenteilen erreicht, die ihrerseits in Abhängigkeit von ihrem Abstand zueinander stehen. Die durch kleine Abstände erzielbaren höheren Haltekräfte erfordern jedoch höhere Leistungen für den Umschaltvorgang. Dieser Umschaltvorgang erfordert im Moment des Losbrechens aus der Halteposition kurzzeitig höhere Leistungen. Die Gefahr einer zusätzlichen Erwärmung ist aber wegen der sehr kurz gewählten Übererregung von nur wenigen Millisekunden sehr gering. Nach dieser Übererregung kann die Leistung rasch auf eine für die weitere Bewegung der Lamelle erforderliche Höhe in einer oder in zwei Stufen abgesenkt werden. Durch diese Maßnahme sind nicht nur höhere Unempfindlichkeiten bei Erschütterungen, sondern auch größere Dichtheiten und Toleranzbereiche in der Fertigung beherrschbar.

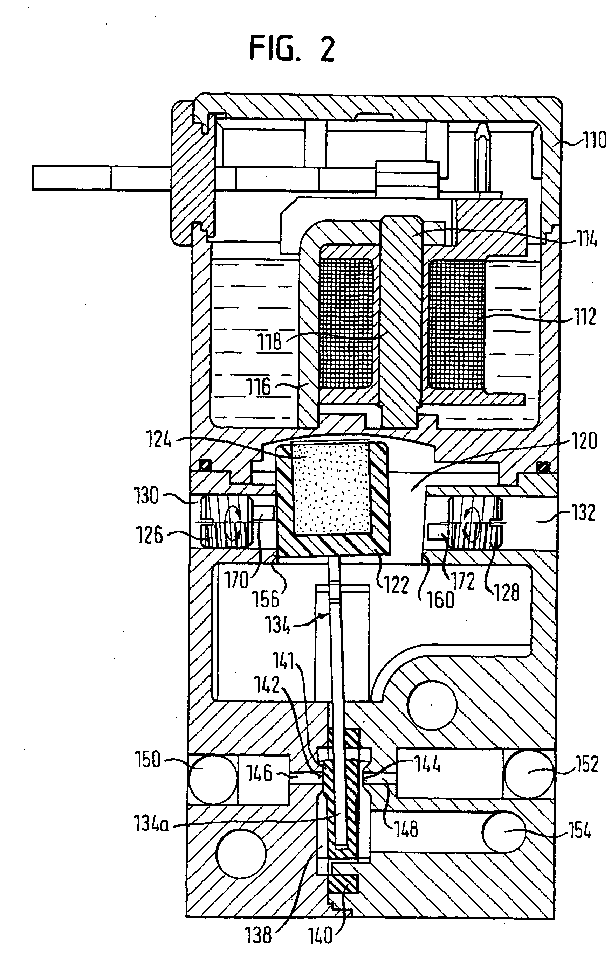

Bei dem in Figur 2 abgebildeten Magnetventil sind die der in der Figur 1 gezeigten nicht zur Erfindung gehörenden Ausführungsform entsprechenden technischen Merkmale durch gleiche Bezugszeichen, jeweils um 100 erhöht, versehen, und es wird auf die obigen Erläuterungen verwiesen.

Das in Figur 2 abgebildete Magnetventil unterscheidet sich von dem in Figur 1 abgebildeten Magnetventil nur dadurch, daß die Weicheisenteile 126, 128 jeweils an ihrem dem Permanentmagneten 124 zugewandten Ende ein exzentrisches Polstück 170 bzw. 172 aufweisen. Durch Drehung der Weicheisenteile 126, 128 um ihre Längsachse kann jeweils die Länge des Hebelarms, mit dem die Magnetkräfte an der Schaltlamelle 136 angreifen, und damit die Größe der Dicht-und Haltekräfte verändert werden. Entsprechend der in Figur 1 abgebildeten nicht zur Erfindung gehörenden Ausführungsform sind auch hier die Bohrungen 130, 132 jeweils durchgehend ausgeführt, so daß die Lage der Weicheisenteile 126, 128 von der Außenseite des Gehäuses 110 her verstellt werden kann.

## Patentansprüche

1. Miniaturisiertes Magnetventil mit einem Gehäuse (110), einem in dem Gehäuse (110) gebildeten fluidischen Steuerraum (138), in den zwei Strömungskanäle (146, 148) an zwei einander gegenüberliegenden Dichtsitzen (142, 144) münden, einer im Gehäuse (110) schwenkbar gelagerten, von elastischem Material umgebenen Schaltlamelle (36), die sich zwischen den Dichtsitzen (142, 144) erstreckt und selektiv an den einen (142) oder anderen (144) der Dichtsitze dichtend anlegbar ist, einem mit der Schaltlamelle (36) verbundenen Betätigungsarm (34, 134), an dessen einem Ende ein Permanentmagnet (124) angeordnet ist, und einem mit dem Permanentmagnet (124) zusammenwirkenden Elektromagnet, durch den die Schaltlamelle (36) zwischen einer ersten und einer zweiten Schaltstellung umschaltbar ist, wobei der Permanentmagnet (124) in der ersten und in der zweiten Schaltstellung jeweils einem justierbar im Gehäuse (110) gehaltenen und in einer Bohrung (130, 132) verdrehbar angeordnetem Teil (126, 128) gegenüberliegt, **dadurch gekennzeichnet, daß** die Teile (126, 128) Weicheisenteile (126, 128) sind, daß die Bohrungen (130, 132) jeweils im Gehäuse (110) gebildet sind und daß die Weicheisenteile (126, 128) jeweils an ihrem dem Permanentmagnet (124) zugewandten Ende ein exzentrisches Polstück (170, 172) aufweisen.

2. Magnetventil nach Anspruch 1, **dadurch gekennzeichnet, daß** die erste und die zweite Schaltstellung der Schaltlamelle (36) im Gehäuse (110) durch Anschläge (156, 160) definiert sind.

3. Magnetventil nach einem der vorstehenden Ansprüche, **dadurch gekennzeichnet, daß** der Elektromagnet relativ zur Längsachse der Schaltlamelle (36) versetzt angeordnet ist.

4. Magnetventil nach einem der vorstehenden Ansprüche, **dadurch gekennzeichnet, daß** der Betätigungsarm (34, 134) zwei parallele, voneinander beabstandete Längsarme (34a, 34b) aufweist, die am einen Ende jeweils mit dem Permanentmagnet (124) verbunden und am anderen, entgegengesetzten Ende miteinander durch einen Quersteg (34c) verbunden sind, an dem die Schaltlamelle (36) angeschlossen ist.

5. Magnetventil nach Anspruch 4, **dadurch gekennzeichnet, daß** die Schaltlamelle (36) und der Quersteg (34c) in das elastische Material eines die Schaltlamelle (36) umgebenden Rahmens (40, 140) eingebettet sind.

6. Magnetventil nach Anspruch 5, **dadurch gekennzeichnet, daß** der Rahmen (40, 140) frei zwischen den Längsarmen (34a, 34b) des Betätigungsarmes (34, 134) angeordnet ist.

7. Magnetventil nach Anspruch 5 oder 6, **dadurch gekennzeichnet, daß** der Rahmen (40, 140) fluiddicht im Gehäuse (110) eingespannt ist und der Quersteg (34c) die Schwenkachse der Schaltlamelle (36) und des Betätigungsarmes (34, 134) bildet.

8. Magnetventil nach einem der vorstehenden Ansprüche, **dadurch gekennzeichnet, daß** der Elektromagnet über eine mindestens zweistufige, in das Ventil integrierte Elektronikschaltung übererregt ansteuerbar ist.

## Claims

1. A miniaturized solenoid valve comprising a housing (110), a fluidic control space (138) which is formed in the housing (110) and into which two flow channels (146, 148) open at two sealing seats (142, 144) located opposite each other, a switching lamina (36) pivotally mounted in the housing (110) and surrounded by an elastic material, the switching lamina (36) extending between the sealing seats (142, 144) and being adapted to selectively contact the one (142) or the other (144) of the sealing seats for sealing action, an actuating arm (34, 134) connected to the switching lamina (36) and having arranged at one end a permanent magnet (124), and an electromagnet which cooperates with the permanent magnet (124) and by means of which the switching lamina (36) can be switched over between first and second switching positions, the permanent magnet (124), in the first and second switching positions, being opposite a respective part (126, 128) which is adjustably held in the housing (110) and is rotatably arranged in a bore (130, 132), **characterized in that** the parts (126, 128) are soft iron parts (126, 128), that the bores (130, 132) are each formed in the housing (110), and that the soft iron parts (126, 128) each have an eccentric pole piece (170, 172) at their ends facing the permanent magnet (124).

2. The solenoid valve according to claim 1, **characterized in that** the first and second switching positions of the switching lamina (36) are defined in the housing (110) by stops (156, 160).

3. The solenoid valve according to either of the preceding claims, **characterized in that** the electromagnet is arranged offset in relation to the longitudinal axis of the switching lamina (36).

4. The solenoid valve according to any of the preceding claims, **characterized in that** the actuating arm (34, 134) has two parallel spaced apart longitudinal arms (34a, 34b), which are each connected at one end with the permanent magnet (124) and are connected with each other at the other, opposite end by a transverse web (34c) to which the switching lamina (36) is connected.

5. The solenoid valve according to claim 4, **characterized in that** the switching lamina (36) and the transverse web (34c) are embedded in the elastic material of a frame (40, 140) surrounding the switching lamina (36).

6. The solenoid valve according to claim 5, **characterized in that** the frame (40, 140) is freely arranged between the longitudinal arms (34a, 34b) of the actuating arm (34, 134).

7. The solenoid valve according to claim 5 or 6, **characterized in that** the frame (40, 140) is clamped in the housing (110) so as to be fluid-tight and the transverse web (34c) forms the swivelling axis of the switching lamina (36) and of the actuating arm (34, 134).

8. The solenoid valve according to any of the preceding claims, **characterized in that** the electromagnet is adapted to be driven in an over-excited manner via an at least two-stage electronic circuit integrated in the valve.

## Revendications

1. Electrovanne miniaturisée, comportant un boîtier (110), une chambre de commande (138) fluidique formée dans le boîtier (110), dans laquelle deux canaux d'écoulement (146, 148) débouchent sur deux sièges d'étanchéité (142, 144) se faisant face, une lamelle de commutation (36) montée à pivotement et entourée par un matériau élastique, qui s'étend entre les sièges d'étanchéité et peut être posée de façon étanche sélectivement sur l'un (142) ou l'autre (144) des sièges d'étanchéité, un bras d'actionnement (34, 134) relié à la lamelle de commutation (36), sur l'extrémité duquel est agencé un aimant permanent (124), et un électroaimant coopérant avec l'aimant permanent (124), grâce auquel la lamelle de commutation (36) peut être commutée entre une première position de commutation et une deuxième position de commutation, l'aimant permanent (124), dans la première et dans la deuxième position de commutation, faisant face à une partie (126, 128) maintenue réglable dans le boîtier (110) et agencée rotative dans un alésage (130, 132), **caractérisée en ce que** les parties (126, 128) sont des parties en fer doux, **en ce que** les alésages (130, 132) sont chacun formés dans le boîtier (110) et **en ce que** les parties en fer doux (126, 128) présentent chacune une pièce polaire excentrée sur leur extrémité tournée vers l'aimant permanent (124).

2. Electrovanne selon la revendication 1, **caractérisée en ce que** les première et deuxième positions de commutation de la lamelle de commutation (36) dans le boîtier (110) sont définies par des butées (156, 160).

3. Electrovanne selon l'une des revendications précédentes, **caractérisée en ce que** l'électroaimant est agencé en décalage par rapport à l'axe longitudinal de la lamelle de commutation (36).

4. Electrovanne selon l'une des revendications précédentes, **caractérisée en ce que** le bras d'actionnement (34, 134) présente deux bras longitudinaux (34a, 34b) parallèles espacés l'un de l'autre, qui sont chacun reliés à l'aimant permanent (124), à une extrémité, et qui sont reliés l'un à l'autre, à l'autre extrémité opposée, par une traverse (34c) sur laquelle est raccordée la lamelle de commutation (36).

5. Electrovanne selon la revendication 4, **caractérisée en ce que** la lamelle de commutation (36) et la traverse (34c) sont noyées dans le matériau élastique d'un cadre (40, 140) entourant la lamelle de commutation (36).

6. Electrovanne selon la revendication 5, **caractérisée en ce que** le cadre (40, 140) est agencé librement entre les bras longitudinaux (34a, 34b) du bras d'actionnement (34, 134).

7. Electrovanne selon la revendication 5 ou 6, **caractérisée en ce que** le cadre (40, 140) est encastré dans le boîtier (11) de manière étanche aux fluides, et la traverse (34c) forme l'axe de pivotement de la lamelle de commutation (36) et du bras d'actionnement (34, 134).

8. Electrovanne selon l'une des revendications précédentes, **caractérisée en ce que** l'électroaimant peut être piloté en étant surexcité par un circuit électrique à au moins deux niveaux, intégré dans la vanne.
